# EUROPEAN PATENT SPECIFICATION

(11) **EP 2 302 899 B1**
(45) Date of publication and mention of the grant of the patent: **09.10.2019**
(21) Application number: 10172345.0
(22) Date of filing: 10.08.2010
(51) Int. Cl.: H04N 5/00, H04N 21/482, H04N 21/433

(54) **Electronic apparatus and program table display method**
Elektronische Vorrichtung und Programmtabellenanzeigeverfahren
Appareil électronique et procédé d'affichage de tableau de programme

(30) Priority: 24.09.2009 JP 2009218567
(43) Date of publication of application: 30.03.2011
(73) Proprietor: Qingdao Hisense Electronics Co., Ltd., Qingdao, Shandong 266555 (CN); Toshiba Visual Solutions Corporation, Misawa-shi, Aomori (JP)
(72) Inventor: Kuwahara, Kazuki, Tokyo 105-8001 (JP)
(74) Representative: Pfenning, Meinig & Partner mbB

(56) References cited:
- WO-A1-2008/004749
- JP-A- 2008 278 222
- JP-A- 2009 152 668
- US-A1- 2002 052 864

## Description

### BACKGROUND

### 1. Field

One embodiment of the invention relates to an electronic apparatus and a program table display method.

### 2. Description of the Related Art

Digital broadcast waves contain service information data as well as video data and audio data. Electronic apparatuses receiving the digital broadcast waves can realize various functions based on the service information data.

For example, there has been disclosed a digital broadcast receiving apparatus which can create an electronic program table where information about broadcast programs are described based on service information data, and display the electronic program table on a part of a screen which is displaying a program (for example, see JP-A-11-112899 (KOKAI)).

In recent years, with increase in recording capacities of HDDs, there have appeared electronic apparatuses with a function by which multiple digital broadcast waves being simultaneously broadcast can be received by multiple tuners, and all of programs meeting conditions including channels, time ranges, etc. can be recorded simultaneously.

By use of the aforementioned technique, an electronic program table can be created based on service information data about the recorded programs. However, multiple programs recorded simultaneously are played back continuously in accordance with what times they were recorded. That is, a program to be played back is changed without user designating programs to-be-viewed newly from the program table. It is therefore requested to indicate a program, which is being played back, exactly on the electronic program table even when recorded programs are played back continuously.

US 2002/0052864 A1 discloses a content searching/providing system searching a record content from a randomly accessible memory storing contents and providing the record content to a user. The system comprises a content classification unit classifying the record contents of the memory in accordance with a predetermined rule a channel assignment unit assigning a virtual channel to each classification a content arrangement unit arranging the record contents classified into the same classification on the corresponding virtual channels a user operation receiving unit receiving a user operation for commanding channel selection and content search on a channel and a content providing unit acquiring a record content from a selected virtual channel in response to the user operation received via the user operation receiving unit and providing the record content.

WO 2008/004749 A1 discloses a method and apparatus for displaying an electronic program guide in a television receiver provided with a PVR function in order to enhance user convenience by providing information of a program recorded and stored in the television receiver as well as information of programs currently broadcast or scheduled to be broadcast. The method of controlling a receiver includes steps of extracting electronic program guide (EPG) information from a received broadcast signal, the EPG information indicating a broadcasting schedule for a plurality of broadcast programs; searching at least one broadcast program of the plurality of broadcast programs, the searched at least one broadcast program corresponding to a temporary storage of the received broadcast signal in a storage device enabling a time-shift function and constructing an EPG in which the searched at least one broadcast program is visually distinguishable from other broadcast programs of the plurality of broadcast programs.

### SUMMARY

One of objects of the invention is to provide an electronic apparatus and a program table display method by which a program which is being played back among recorded programs recorded simultaneously can be displayed more exactly.

According to the present invention the above object is achieved by an electronic apparatus according to claim 1 and by a program table display method according to claim 7. The dependent claims are directed to different advantageous aspects of the invention.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
Fig. 1 is an exemplary diagram showing an appearance of a television broadcast receiving apparatus according to an embodiment of the invention;
Fig. 2 is an exemplary diagram showing an appearance of a remote controller provided in the television broadcast receiving apparatus according to the embodiment of the invention;
Fig. 3 is an exemplary functional block diagram of the television broadcast receiving apparatus according to the embodiment of the invention;
Fig. 4 is an exemplary conceptual diagram of a recording state of a HDD in the embodiment of the invention;
Fig. 5 is an exemplary conceptual diagram of a recording state of time information table in the embodiment of the invention;
Fig. 6 is an exemplary diagram showing an example of a past program table in the embodiment of the invention;
Fig. 7 is an exemplary schematic diagram showing that a channel being played back by a second playback method is switched according to the embodiment of the invention;
Fig. 8 is an exemplary flow chart showing a procedure of processing to be executed by a channel switch control module using the second playback method in the embodiment of the invention;
Fig. 9 is an exemplary flow chart showing a procedure of processing to be executed by the channel switch control module using a first playback method in the embodiment of the invention;
Fig. 10 is an exemplary flow chart showing a procedure to display a past program table at the beginning of playback based on the second playback method, which procedure is executed by a past program table generating module in the embodiment of the invention; and
Fig. 11 is an exemplary flow chart showing a procedure of displaying the past program table during playback based on the second playback method, which procedure is executed by the past program table generating module in the embodiment of the invention.

### DETAILED DESCRIPTION

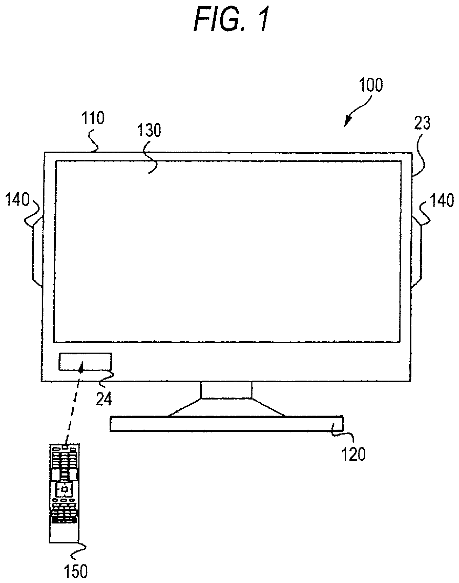

An embodiment of the invention will be described below with reference to Figs. 1 to 11.

A television broadcast receiving apparatus 100 will be described as an electronic apparatus according to the embodiment of the invention by way of example.

Fig. 1 is a diagram showing an appearance of the television broadcast receiving apparatus 100 according to this embodiment. In this embodiment, the television broadcast receiving apparatus will be described as an electronic apparatus according to the embodiment of the invention by way of example, but the electronic apparatus according to the invention is not limited thereto. That is, the electronic apparatus according to the invention may be any apparatus as long as the apparatus is provide with a broadcast receiving function. For example, the apparatus may be a broadcast receiving apparatus, a cellular phone including a broadcast receiving function, a personal computer including a broadcast receiving function, a video recording apparatus mounted with a broadcast receiving apparatus, etc. In addition, broadcasting is not limited to a broadcast to be received as a radio wave propagated in the air, but may be one to be distributed from a broadcast station through a cable or a network such as an IP (Internet Protocol) network so that programs can be received.

The television broadcast receiving apparatus 100 includes a thin cabinet 110 and a support base 120 supporting the cabinet 110. The cabinet 110 houses electronic devices including tuners 3 which will be described later. A video display module 130 is disposed in a front center space of the cabinet 110, and speakers 140 are disposed on opposite side surfaces of the cabinet 110 to play back stereo audio. The video display module 130 is, for example, an SED (Surface-conduction Electron-emitter Display) panel, an LCD (Liquid Crystal Display) panel, or the like.

A reception module 24 for receiving an operation signal sent from a remote controller 150 by wireless is provided in a front lower space of the cabinet 110. In addition, an operation module 23 including a power switch and so on is disposed in a side surface of the cabinet 110 of the television broadcast receiving apparatus 100. The television broadcast receiving apparatus 100 is supplied with power from the outside through a not-shown plug, and receives various kinds of broadcast waves through an antenna 1 which will be described later. Signals of the received broadcast waves are decoded by a signal processing module 12 so that video signals and audio signals are outputted. The video display module 130 processes the decoded video signals to display video, while the speakers 140 process the decoded audio signals to output audio.

In this embodiment, electronic devices including tuners are housed in the cabinet 110, but the invention is not limited thereto. That is, the electronic devices including the tuners 3 may be housed in another housing than the cabinet 110. In this case, this housing is connected to the television broadcast receiving apparatus 100 so that video and audio can be outputted by the video display module 130 and the speakers 140 provided in the television broadcast receiving apparatus 100.

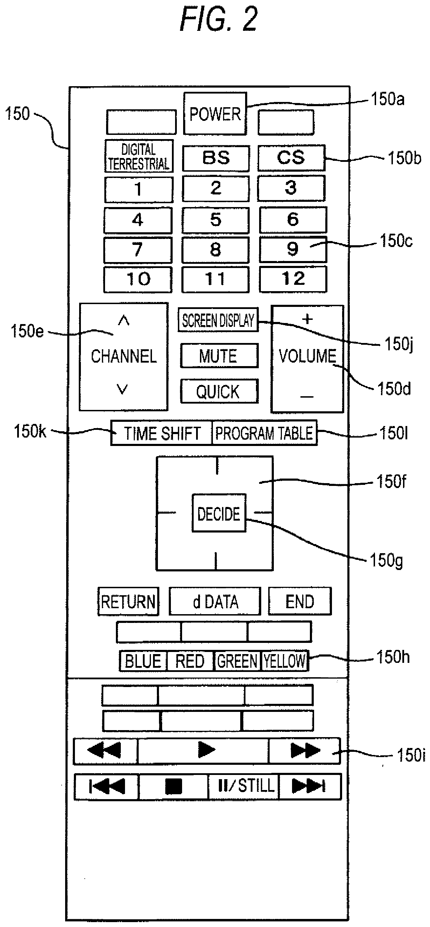

Next, the structure of the remote controller 150 provided in the television broadcast receiving apparatus 100 will be described with reference to Fig. 2. Fig. 2 is a diagram showing an appearance of the remote controller 150 provided in the television broadcast receiving apparatus according to this embodiment.

The remote controller 150 is designed to have a power key 150a, broadcast switch keys 150b, direct channel selection keys 150c, a volume control key 150d, a channel up/down key 150e, a focus key 150f, a decide key 150g, blue, red, green and yellow color keys 150h, special playback keys 150i, a screen display key 150j, a time shift key 150k and a program table key 150l.

The power key 150a is a key for giving an instruction to power on/off the television broadcast receiving apparatus 100. The broadcast switch keys 150b are keys each for giving an instruction to switch a broadcast to be displayed on the television broadcast receiving apparatus 100 among digital terrestrial broadcasting, BS digital broadcasting and CS digital broadcasting. Each direct channel selection key 150c is a key for giving an instruction to display a channel corresponding to the key on the television broadcast receiving apparatus 100. The volume control key 150d is a key for giving an instruction to change the volume to be outputted from the speakers 140.

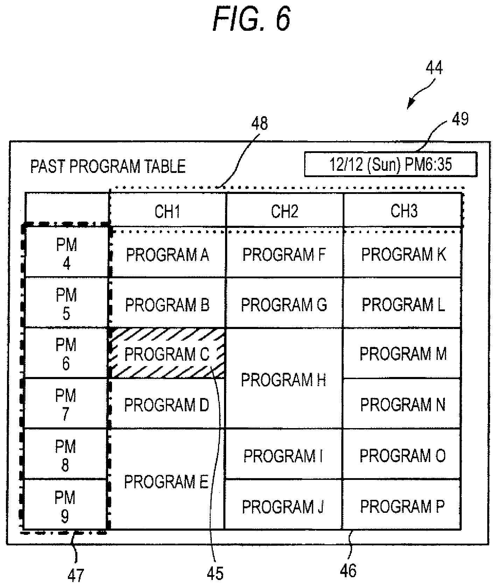

The channel up/down key 150e is a key for giving an instruction to change a channel to be displayed on the television broadcast receiving apparatus 100 in channel number order. The focus key 150f is a key for giving an instruction to move a focus 45 (Fig. 6) to be displayed on the video display module 130. The decide key 150g is a key for giving an instruction to select an item where the focus key 150f is located.

Each color key 150h is a key each for giving an instruction for operation corresponding to an operation guide displayed on the screen and assigned to the color key. Each special playback key 150i is a key for giving an instruction for special playback such as fast forward, rewind, stop, play back, skip to next program, skip to previous program, etc. The screen display key 150j is a key for displaying a banner or the like indicating a playback position in a recorded program.

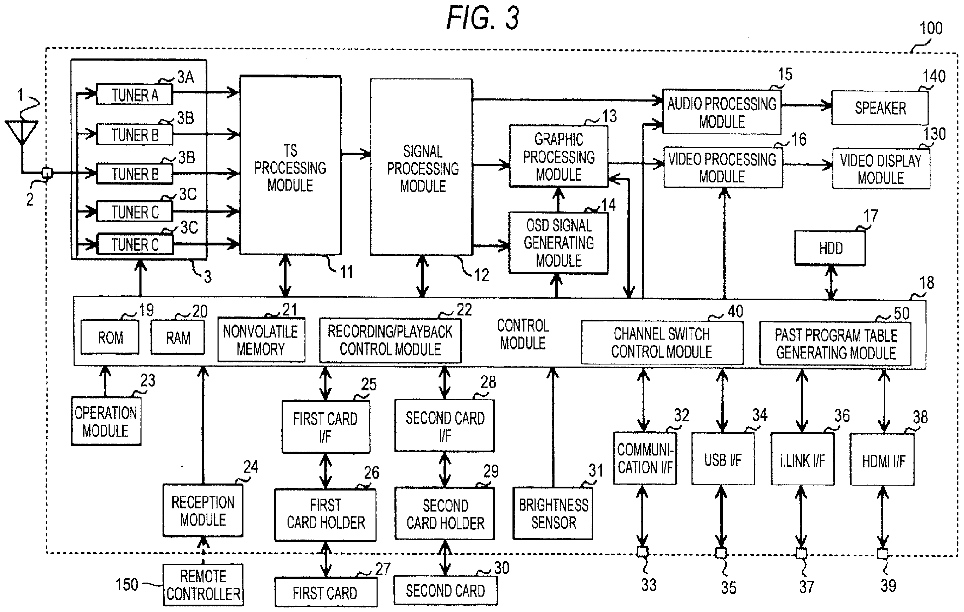

The time shift key 150k is a key for displaying a past program table 44 (Fig. 6), which shows programs recorded simultaneously by a second recording method which will be described later. When the time shift key 150k is pushed down, the past program table 44 is displayed. As soon as a program to be played back is designated in the past program table 44, the television broadcast receiving apparatus 100 enters a time shift mode which will be described later. The program table key 1501 is a key for displaying a program table including one week programs since the current time based on EPG (Electronic Program Guide) information. In addition, when playback is being performed by a second playback method which will be described later, the past program table 44 can be displayed. As soon as any key is operated, an operation signal indicating the contents of an instruction corresponding to the key is supplied to a control module 18 shown in Fig. 3, through the reception module 24.

Fig. 3 is a functional block diagram of the television broadcast receiving apparatus 100 according to this embodiment. Functions of the television broadcast receiving apparatus 100 displaying the past program table 44 according to this embodiment will be described with reference to Fig. 3.

The television broadcast receiving apparatus 100 includes the antenna 1, an input terminal 2, the tuners 3, a TS (Transport Stream) processing module 11, the signal processing module 12, a graphic processing module 13, an OSD (On Screen Display) signal generating module 14, an audio processing module 15, a video processing module 16, an HDD (Hard Disk Drive) 17, the control module 18, the operation module 23, the reception module 24, a first card I/F (Interface) 25, a first card holder 26, a second card I/F 28, a second card holder 29, a brightness sensor 31, a communication I/F 32, a LAN terminal 33, a USB I/F 34, a USB terminal 35, an i.LINK I/F 36, an i.LINK terminal 37, an HDMI I/F 38, an HDMI terminal 39, the video display module 130 and the speakers 140.

In addition, the control module 18 includes a ROM (Read Only Memory) 19, a RAM (Random Access Memory) 20, a nonvolatile memory 21, a recording/playback control module 22, a channel switch control module 40, and a CPU (Central Processing Unit).

The antenna 1 is an antenna which is designed to be able to receive digital terrestrial broadcasting, BS digital broadcasting and CS digital broadcasting as broadcasting formats.

The input terminal 2 supplies a broadcast signal received by the antenna 1 to the multiple tuners 3.

In accordance with a control signal from the control module 18, each tuner 3 selects a broadcast signal of a desired channel from three kinds of digital terrestrial broadcasting, BS digital broadcasting and CS digital broadcasting, demodulates the broadcast signal of the selected channel (by OFDM (Orthogonal Frequency Division Multiplexing) demodulation in the case of digital terrestrial broadcasting or by PSK (Phase Shift Keying) demodulation in the case of BS digital broadcasting or CS digital broadcasting) to thereby obtain a TS (Transport Stream) containing a desired program, and supplies the TS to the TS processing module 11.

The multiple tuners 3 are provided and will be referred to as tuners 3A, 3B and 3C respectively in accordance with broadcast waves to be received. If there is no need to distinguish the tuners 3A to 3C in particular, each tuner will be referred to as "tuner 3" simply. In this specification, the tuner 3A serves for viewing, and tuners 3B and 3C serve for recording. Description will be made later on a difference between recording methods using broadcast signals of channels selected by the tuners 3B and 3C respectively.

The multiple TSs of selected channels are supplied from the tuners 3 to the TS processing module 11. The TS processing module 11 remultiplexes the TSs into one TS and supplies the remultiplexed TS to the signal processing module 12.

When recording is performed, the TSs of channels selected by the tuners 3B and 3B are supplied from the tuners 3 to the TS processing module 11. The TS processing module 11 remultiplexes the TSs into one TS and supplies the remultiplexed TS to the signal processing module 12.

The signal processing module 12 applies suitable digital signal processing to the TS into which TSs of the multiple channels are remultiplexed and which is supplied from the TS processing module 11. The TS to which the digital signal processing has been applied is separated into a data signal, a video signal and an audio signal. The separated video signal is outputted to the graphic processing module 13, the audio signal is outputted to the audio processing module 15, and the data signal is outputted to the OSD signal generating module 14 or the control module 18. In addition, the TS remultiplexed by the TS processing module 11 is supplied to the control module 18 for recording.

The data signal contains various pieces of information about broadcast programs. The information about the programs includes time information. In Japanese digital terrestrial broadcasting, ARIB STD-B10, which is a standard established by the Association of Radio Industries and Businesses (ARIB), defines a time and date table (TDT) and a time offset table (TOT) as tables of program arrangement information. The time offset table (TOT) contains information of offset time serving when summer time is applied. Current date and current time by Japanese Standard Time (JST=UTC(Universal Time, Coordinated)+9) and Modified Julian Day (MJD) are transmitted by those tables.

A time and date offset table (TOT) is used as current date and current time in this specification. According to ARIB TR-B14 defining operation regulation for digital terrestrial broadcasting in Japan, a default period with which the time and date offset table (TOT) should be transmitted is defined as 5 seconds. The TOT is transmitted with a period of 5 seconds.

EPG information is another piece of the information about programs contained in the data signal. The EPG information includes channel information, a channel number, a program name, a schedule, etc. In this embodiment, the EPG information is used for generating a program table of one week programs since the current time and the past program table 44 of recorded programs. The past program table 44 is generated by a past program table generating module 50.

The graphic processing module 13 performs processing for decoding the digital video signal outputted from the signal processing module 12. The decoded video signal is superposed on and combined with an OSD signal outputted from the OSD signal generating module 14. The resulting combined signal is outputted to the video processing module 16. The graphic processing module 13 can also output the decoded video signal or the OSD signal to the video processing module 16 selectively.

Under the control of the control module 18, the OSD signal generating module 14 generates an OSD signal for displaying a UI (User Interface) screen or the like. In addition, the aforementioned data signal separated from the digital broadcast signal by the signal processing module 12 is converted into an OSD signal in a suitable format by the OSD signal generating module 14 and outputted to the graphic processing module 13.

The audio processing module 15 converts the audio signal supplied from the signal processing module 12, into an analog audio signal in a format with which the audio signal can be played back by the speakers 140. The converted analog audio signal is supplied to the speakers 140 and played back thereby.

The video processing module 16 converts the signal outputted from the graphic processing module 13, into an analog video signal in a format with which the video signal can be played back on the video display module 130. The converted analog video signal is outputted to the video display module 130.

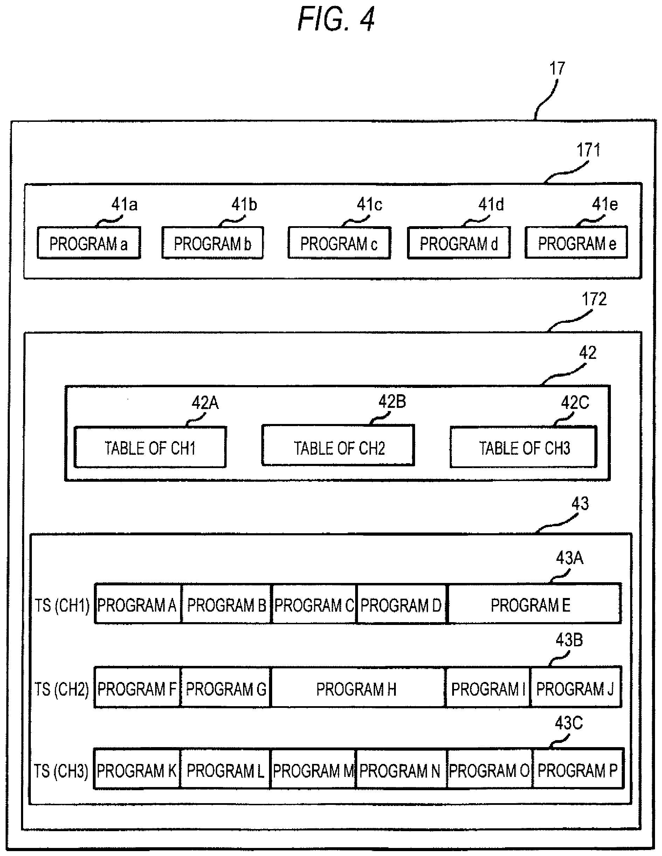

The HDD 17 stores TSs of every channel under the control of the recording/playback control module 22. The recording state of the HDD 17 will be described later with reference to Fig. 4.

The control module 18 starts up a system control program and various processing programs recorded in advance on the ROM 19 in accordance with an operation signal inputted from the operation module 23 or an operation signal transmitted from the remote controller 150 and received through the reception module 24. The control module 18 controls operation of each module of the apparatus with the RAM 20 as a working memory in accordance with the programs started up.

The ROM 19 is a memory for storing the system control program and various processing programs to be executed by the CPU.

The RAM 20 is a so-called working memory where the CPU will expand various programs.

The nonvolatile memory 21 stores various setting information, control information, etc. required for controlling operation of each module. In this embodiment, assume that the nonvolatile memory 21 stores channel information of a broadcast viewed immediately before playback of a recorded program.

The recording/playback control module 22 controls the function of the television broadcast receiving apparatus 100 to record a program and play back the recorded program. That is, the recording/playback control module 22 demultiplexes the TS, into which the TSs of the multiple channels have been remultiplexed and which is outputted from the TS processing module 11, into respective TSs of the respective channels. The demultiplexed TSs are recorded on the HDD 17.

In addition, the recording/playback control module 22 carries out control to play back the recorded data, so that each TS of each channel stored in the HDD 17 can be read, played back and then displayed on the video display module 130, or audio can be outputted from the speakers 140. When the LAN terminal 33 is provided as a port for exclusive use in an LAN HDD, information of programs based on high-definition image quality can be stably recorded on the HDD 17 without being affected by the environment of another network, the network use condition, etc.

In this embodiment, the television broadcast receiving apparatus 100 has two kinds of recording methods. Here, a first recording method is a recording method for designating programs to be recorded individually or for designating the start and end of recording in an arbitrary time. That is, in the first recording method, a broadcast wave of a designated program is received and the TS corresponding to this broadcast wave is recorded on the HDD 17. This method is the same recording method as in a related-art HDD recorder or the like where programs to be recorded should be designated individually. Each tuner 3B is used as a tuner for receiving a broadcast wave for use in the first recording method.

The second recording method is not for designating programs individually, but for designating conditions such as channels, hours, days, etc. and recording all the programs that satisfy the conditions. That is, the multiple broadcast waves corresponding to the conditions are received, and the TSs corresponding to these broadcast waves are recorded on the HDD 17 in parallel and channel by channel. Each tuner 3C is used as a tuner for receiving a broadcast wave for use in the second recording method.

Fig. 4 is a conceptual diagram of the recording state of the HDD 17 in this embodiment. Recording states of programs recorded by the aforementioned two kinds of recording methods will be described with reference to Fig. 4.

The recording/playback control module 22 divides the HDD 17 into a first recording area 171 and a second recording area 172 and performs recording thereon. TSs of programs recorded by the first recording method are stored in the first recording area 171. A time information table 42 created for each channel and each TS 43 of each channel recorded by the second recording method are recorded in the second recording area 172.

TSs of programs a to e recorded in accordance with programs individually designated by the user are stored in the first recording area 171 (41a to 41e). The TS of each program a to e is stored together with channel information about the program and program information including the name of the program.

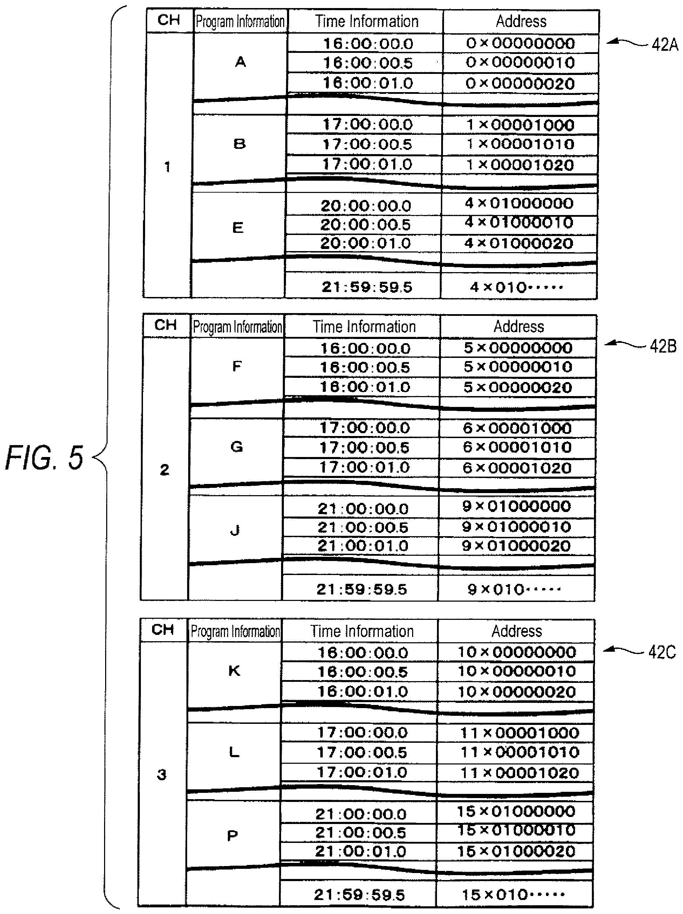

Fig. 5 is a conceptual diagram of the recording state of time information table 42 in this embodiment. Time information tables 42A to 42C correspond to Channels 1 to 3 respectively. Channel information, program information, time information and address are recorded in each time information table 42 so as to be associated with one another. The time information tables 42 are created every 0.5 seconds, for example, correspondingly to the GOP (Group Of Picture) interval of broadcasting of MPEG (Moving Picture Experts Group) 2. In addition, the address is a logical address or a physical address.

Programs A to P recorded in Channels 1 to 3 with designated conditions of time ranges, days of the week, or the like are stored as TSs 43 (TS43A, TS43B, TS43C) for the respective channels in the second recording area 172. When the recording capacity of the second recording area 172 has reached its limit, recording is continued while parts in the TSs 43 are deleted sequentially in an older recording time order. In accordance therewith, parts in the time information tables 42 are also deleted sequentially in an older recording time order, and parts for a program recorded newly are created and stored.

The time information tables 42 are not always recorded in the second recording area 172. That is, the time information tables 42 may be recorded on the nonvolatile memory 21 or on recording media connected through various interfaces.

In addition, in this embodiment, the television broadcast receiving apparatus 100 has two kinds of playback methods as methods for playing back recorded programs.

First, as a first playback method, there is a method for playing back only one program selected from programs stored in the first recording area 171. That is, in the first playback method, a list of programs a to e stored in the first recording area 171 is displayed, and one program selected based on the displayed list is played back.

As the second playback method, there is a method for playing back TSs of the multiple channels stored in the second recording area 172 continuously, sequentially, switchably among the channels and along their recording times. That is, when a channel being played back is switched to another selected channel during playback of any one of TSs 43A to 43C of Channels 1 to 3 stored in the second recording area 172, the TS of the selected channel as a destination of the channel switching is read from the second recording area 172 and displayed to start at a time point recorded in almost the same time as the time of the channel which had been played back till then. Thus, a program in the switched channel can be viewed retrospectively as if broadcasting of the program were viewed in real time.

The phrase "almost the same time" means about 10 seconds around the recording time corresponding to the position of playback. It takes a few seconds to display video on the video display module 130 after starting playback of a TS 43. As a result, when playback is moved to a position of a program recorded in the same recording time, actually displaying the video of the program may be delayed by a few seconds. Therefore, the position of the program may be moved to a position recorded a few seconds earlier than the time information of the TS 43 which is being played back when the channel switching operation is performed. When the position is moved to the few seconds earlier position of the TS 43, a video image recorded in the same time as the recording time of the channel which had been viewed before the channel switching operation can be displayed actually.

Alternatively, the position of the program may be moved to a position recorded a few seconds later than the time information of the TS 43 which is being played back when the channel switching operation is performed. When the position is moved to the few seconds later position of the TS 43, the operation to switch the channel when a broadcast is being viewed in real time can be played back retrospectively.

The second playback method is carried out in the case where the time shift key 150k is pushed down to designate a program in the past program table 44 as shown in Fig. 6. That is, the second playback method is referred to as "time shift mode". That is, when a program to be played back is selected from programs A to P recorded by the second recording method as shown in the past program table 44, playback is carried out by the second playback method. According to the time shift mode using the second playback method, the selected recorded program is first played back and other recorded programs are then played back continuously, sequentially and along their recording times.

In addition, when the program table key 1501 is pushed down during playback based on the second playback method, the past program table 44 is displayed. When a desired program is designated from the past program table 44, a program to be played back can be switched to the designated program.

Fig. 6 is a diagram showing an example of the past program table 44 in this embodiment. As shown in Fig. 6, the past program table 44 includes the focus 45, a table 46, a recording time indicator 47, a channel indicator 48 and a playback time indicator 49.

The focus 45 moves on the table 46 in accordance with operation on the focus key 150f. The focus 45 may be designed to indicate a difference color in the frame or inside of a column of a selected program from that in any program column in order to show that the program has been selected.

When a channel which had been viewed immediately before the start of playback based on the second playback method has been recorded by the second recording method, the focus 45 is applied to the position of the latest recorded program of the viewed channel. When the channel which had been viewed immediately before the start of playback based on the second playback method has not been recorded by the second recording method, the focus 45 is applied to the position of the latest recorded program of the channel whose channel number is the smallest of channels recorded by the second recording method.

In addition, when the program table key 1501 is pushed down during playback based on the second playback method, the past program table 44 is displayed. When a desired program is designated from the past program table 44, a program to be played back can be switched to the designated program.

When the program table key 150l is pushed down during playback based on the second playback method, the past program table 44 is displayed. In this case, the focus 45 is applied to the position of a recorded program which is being played back when the program table key 150l is pushed down.

The table 46 is a table for displaying recorded programs. The ordinate of the table 46 serves as the recording time indicator 47, and the abscissa of the table 46 serves as the channel indicator 48. Program information determined from channel information and time information based on EPG information is displayed in each cell of the table 46.

The recording time indicator 47 displays a table where up to six hours of recorded programs among recorded programs recorded by the second recording method are tracked back from the recording time of the latest recorded program. When the recording time does not reach six hours, only recorded programs are displayed.

The channel indicator 48 indicates channels of TSs 43 stored in the second recording area 172.

The playback time indicator 49 indicates recording time when a program being played back by the second playback method was recorded.

When the focus 45 is moved in the table 46 by operation on the focus key 150f, and the decide key 150g is pushed down with the focus 45 being applied to a desired program, the recording/playback control module 22 carries out playback of the program to which the focus 45 is applied. In the example shown in Fig. 6, when the decide key 150g is pushed down with the focus 45 being applied to the program C, the recording/playback control module 22 first play backs the program C. As soon as the playback of the program C is terminated, the recording/playback control module 22 sequentially play backs the program D.

In the case where a program is being recorded by the second recording method when the time shift key 150k is pushed down, the program being recorded is displayed in the lowest row of the table 46. In addition, of the cell of the program being recorded, a part being recorded is displayed in a different manner from the other part on the table 46.

The operation module 23 accepts an operation signal in accordance with user's operation, and supplies the operation signal to the control module 18.

The reception module 24 accepts an operation signal in accordance with user's operation on the remote controller 150, and supplies the operation signal to the control module 18.

The first card holder 26 is connected to the control module 18 through the first card I/F 25. A first card 27 can be attached to the first card I/F 25. The first card 27 is a recording medium such as an SD (Secure Digital) memory card, an MMC (MultiMedia Card), a CF (Compact Flash) (registered trademark) card, etc. The first card 27 attached to the first card holder 26 and the control module 18 can transmit information to each other through the first card I/F 25. The control module 18 can store data of images, music, broadcast programs, etc. into the first card 27. In addition, the control module 18 reads out data of images, music, broadcast programs, etc. stored in the first card 27, and then decoding processing is performed on the read data in the audio processing module 15, the video processing module 16, etc. so that the data can be displayed as video on the video display module 130 or outputted as audio from the speakers 140.

The second card holder 29 is connected to the control module 18 through the second card I/F 28. A second card 30 can be attached to the second card I/F 28. The second card 30 is a recording medium, for example, for recording contract information of broadcast reception contracts or the like. The second card 30 attached to the second card holder 29 and the control module 18 can transmit information to each other through the second card I/F 28.

The brightness sensor 31 is disposed in the front surface of the cabinet 110. The brightness sensor 31 detects brightness of the environment where the television broadcast receiving apparatus 100 is installed. A result of the detection is supplied to the control module 18. The control module 18 controls the luminance of the video display module 130 based on the supplied detection result about the brightness.

The LAN (Local Area Network) terminal 33 is connected to the control module 18 through the communication I/F 32. The LAN terminal 33 is used as a port for exclusive use in an LAN HDD using Ethernet (registered trademark). When a LAN HDD is connected to the LAN terminal 33 as an NAS (Network Attached Storage), the HDD 17 and the control module 18 can transmit information to each other through the communication I/F 32. In this case, the control module 18 serves as a DHCP (Dynamic Host Configuration Protocol) server, which assigns an IP (Internet Protocol) address to the LAN HDD connected to the LAN terminal 33, and controls the LAN HDD with the IP address.

A recording medium such as a hard disk, a DVD (optical disk), etc. can be attached to an apparatus such as an HDD, a PC, a DVD recorder, etc. connected to the control module 18 through the communication I/F 32. The control module 18 can store data of images, music, broadcast programs, etc. into the recording medium through a hub and an apparatus connected to the hub. In addition, the control module 18 reads out the data of images, music, broadcast programs, etc. stored in the recording medium, and play backs the read data. Thus, the data can be displayed as video on the video display module 130 or outputted as audio from the speakers 140.

The USB (Universal Serial Bus) terminal 35 is connected to the control module 18 through the USB I/F 34. The USB terminal 35 is used as a general USB port. For example, a cellular phone, a digital camera, a card reader/writer for various memory cards, an HDD, a keyboard, etc. are connected to the USB terminal 35 through a hub. The control module 18 and an apparatus connected thereto through the USB terminal 35 and the USB I/F 34 can transmit information to each other.

The i.LINK terminal 37 is connected to the control module 18 through the i.LINK I/F 36. For example, an AV-HDD, a D(Digital)-VHS (Video Home System) or the like is serial-connected to the i.LINK terminal 37. The control module 18 and an apparatus connected thereto through the i.LINK terminal 37 and the i.LINK I/F 36 can transmit information to each other.

The HDMI terminal 39 is connected to the control module 18 through the HDMI I/F 38. For example, a personal computer, a liquid crystal display, an AV amplifier or the like is connected to the HDMI terminal 39. The control module 18 and an apparatus connected thereto through the HDMI terminal 39 and the HDMI I/F 38 can transmit information to each other.

The channel switch control module 40 controls the operation of switching a channel during playback by any one of the first and second playback methods. An instruction to perform the operation of switching the channel is given by any one of the direct channel selection keys 150c and the channel up/down key 150e. In this embodiment, the operation of switching the channel varies depending on which playback method is being used.

First, when a program is being played back by the first playback method, the program is switched to a program which is being broadcast currently in the same channel. That is, when a designated program is being played back, a program of another channel was not always recorded at the same time as the program being played back. Therefore, a program which is being broadcast currently in the same channel is switched without switching the channel from one recorded program to another.

When a program is being played back by the second playback method, the program is changed to a program of another channel which was recorded at the same time as the program being played back. When one recorded channel is switched to another recorded channel based on the playback time, a program in the switched channel can be viewed retrospectively as if broadcasting of the program were viewed in real time. When any other channel was not recorded at the same time, warning indicating that the channel cannot be switched to the designated channel is displayed.

Next, description will be made on the channel switching operation based on the operation of the direct channel selection keys 150c and the channel up/down key 150e of the remote controller 150 in each playback method.

First, description will be made in the case where an instruction to switch the channel is given by a direct channel selection key 150c when a selected desired program is being viewed by the first playback method. When a direct channel selection key 150c is pushed down in the case where a selected desired program is being played back by the first playback method, the channel switch control module 40 changes the program to a program which is being broadcast currently in a channel designated by the direct channel selection key 150c.

Next, description will be made in the case where an instruction to switch the channel is given by the channel up/down key 150e when a selected desired program is being viewed by the first playback method. When the channel up/down key 150e is pushed down in the case where a selected desired program is being played back by the first playback method, the channel switch control module 40 acquires channel information of a channel viewed immediately before the playback of the recorded program, from the nonvolatile memory 21. The channel switch control module 40 changes the program to a program being currently broadcast in the channel based on the channel information. Alternatively, the program may be changed to a program being currently broadcast in one of adjacent channels to the channel viewed immediately before the playback of the recorded program.

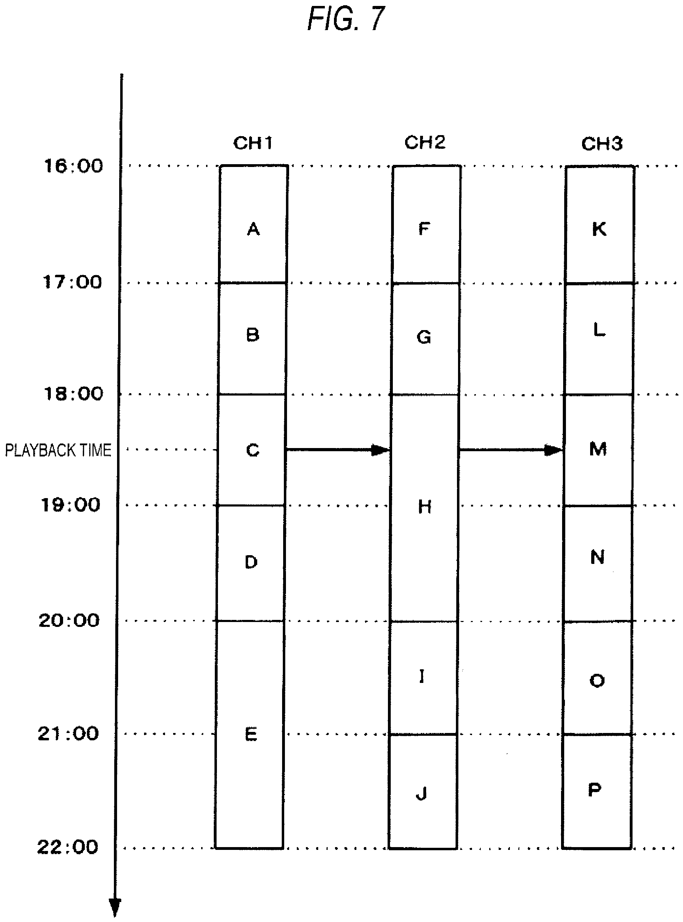

Fig. 7 is a schematic diagram showing that a channel being played back by the second playback method is switched according to this embodiment. The operation of switching a channel which is being played back by the second playback method will be described with reference to Fig. 7. The following description will be made in the case where the position is changed to a position of a TS 43 of a destination channel to be switched which was recorded at the same time as the playback time. However, the position may be regarded as a position which was recorded at almost the same time.

Fig. 7 shows recorded programs stored in the second recording area 172 channel by channel, where the ordinate is set as a temporal axis. Fig. 7 depicts that programs broadcast from 4 p.m. to 10 p.m. in Channel 1 (CH1), Channel 2 (CH2) and Channel 3 (CH3) were recorded. For example, in Channel 1, a program A was recorded from 4 p.m. to 5 p.m., a program B was recorded from 5 p.m. to 6 p.m., a program C was recorded from 6 p.m. to 7 p.m., a program D was recorded from 7 p.m. to 8 p.m., and a program E was recorded from 8 p.m. to 10 p.m.

First, description will be made in the case where an instruction to switch a channel is given by a direct channel selection key 150c when the channel is being played back by the second playback method. When a direct channel selection key 150c is pushed down in the case where a program broadcast in one channel is being played back by the second playback method, the channel switch control module 40 reads out a TS 43 of a channel corresponding to the pushed-down direct channel selection key 150c and play backs the TS 43.

For example, Channel 2 of the direct channel selection keys 150c is pushed down when the program C of Channel 1 is being played back. An address of a TS 43A which is being played back at that time is read from a time information table 42A in order to acquire time information corresponding to the address. Based on the acquired time information, an address of a TS 43B recorded at the same time as the TS 43A is acquired from a time information table 42B of Channel 2. Reading the TS 43B is started at the position of the acquired address.

For example, one of the direct channel selection keys 150c assigned to Channel 2 is pushed down at the time of 18:30:01.0 when Channel 1 is being played back. Then, the channel switch control module 40 searches the time information table 42B for a time point of a program recorded with time information set as 18:30:01.0. In Channel 2, the program recorded at 18:30:01.0 is a program H. Thus, the TS 43B is read from an address recorded correspondingly to 18:30:01.0. In this manner, the operation of switching from Channel 1 to Channel 2 in response to the pushing-down of the direct channel selection key 150c is completed.

Next, description will be made in the case where an instruction to switch a channel is given by the channel up/down key 150e when the channel is being played back by the second playback method. When the channel up/down key 150e is pushed down in the case where a program broadcast in one channel is being played back by the second playback method, the channel switch control module 40 reads out a TS 43 of a channel corresponding to the pushed-down channel up/down key 150e and play backs the TS 43. In this embodiment, Channels 1, 2 and 3 have been recorded simultaneously by the second recording method. By the channel up/down key 150e, the channel is switched in the up or down direction in channel number order.

For example, the up key of the channel up/down key 150e is pushed down when the program C of Channel 1 is being played back. Then, an address of the TS 43A which is being played back at that time is read from the time information table 42A in order to acquire time information corresponding to the address. An address associated with the same time as the acquired time information is acquired from the time information table 42B of Channel 2 whose channel number is one larger than that of Channel 1. The TS 43B is read from the acquired address. In this manner, the operation of switching from Channel 1 to Channel 2 is completed.

Assume that three channels of Channel 1 to Channel 3 have been recorded. In this case, when the up key is pushed down again after the channel is switched to Channel 2, the channel is switched from Channel 2 to Channel 3. When the up key is pushed down again after the channel is switched to Channel 3, the channel is switched to Channel 1. In this manner, the channel is switched cyclically in channel number order. On the other hand, when the down key is pushed down during the playback of Channel 1, the channel is switched to Channel 3. That is, the channel is switched cyclically in reverse to the case of the up key.

In the aforementioned manner, in the second playback method, channel switching is executed with reference to the time information table 42 where time information is associated with an address in each of channels broadcast simultaneously.

When a program recorded in a destination channel to be switched is wanted to be viewed from the start of the program, the program can be rewound if the previous program skip key of the special playback keys 150i is pushed down.

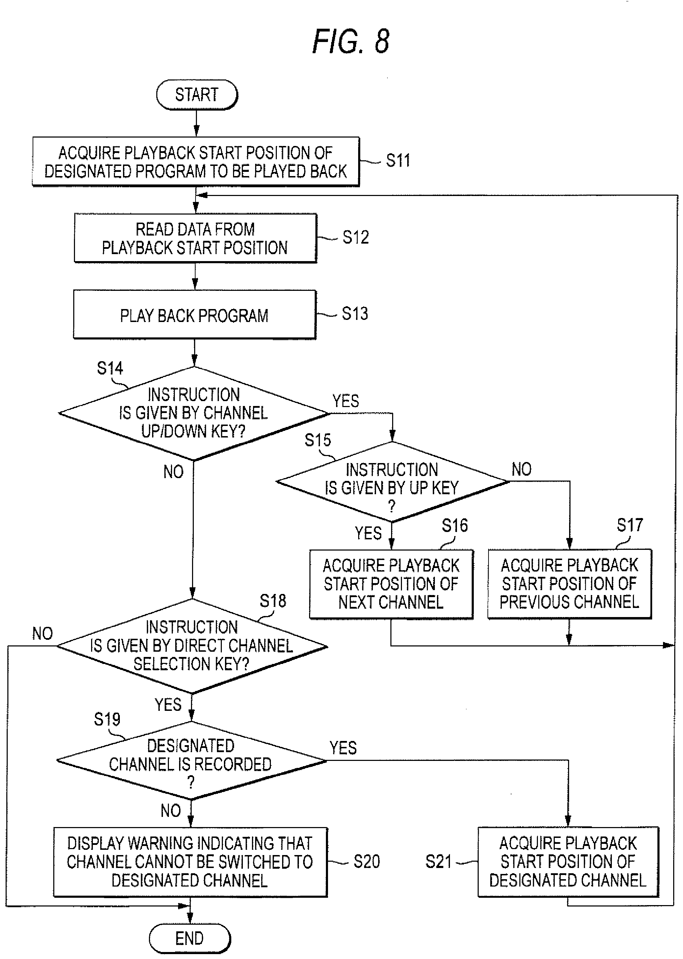

Fig. 8 is a flow chart showing the procedure of processing to be executed by the channel switch control module 40 using the second playback method in this embodiment. The procedure of processing until a channel being played back by the second playback method is switched will be described with reference to Fig. 8.

First, the recording/playback control module 22 searches the second recording area 172 for a channel of a program selected from the past program table 44 and an address corresponding to the start time of the program so as to acquire a playback start position (Step S11). Next, the recording/playback control module 22 reads a TS 43 at the acquired playback start position from the second recording area 172 (Step S12). The recording/playback control module 22 sends the read TS 43 to the audio processing module 15 and the video processing module 16 so as to play back the program (Step S13).

Next, the channel switch control module 40 determines whether an instruction from the channel up/down key 150e has been received or not (Step S14). When the determination in Step S14 results in that an instruction from the channel up/down key 150e has been received (Yes in Step S14), the channel switch control module 40 determines whether the instruction is from the up key or not (Step S15).

When the determination in Step S15 results in that the instruction is from the up key (Yes in Step S15), the channel switch control module 40 acquires a playback start position of a channel (next channel) whose channel number is larger than the channel number of the channel which is being played back currently (Step S16). That is, time information recorded at the same time is searched in a channel whose channel number is larger than the channel which is being played back currently of channels recorded simultaneously by the second recording method. An address corresponding to the time information is acquired. The playback start position is thus acquired. Then, the procedure returns to Step S12, where the TS 43 is read from the acquired playback position. Thus, switching the channel is carried out.

On the other hand, when the determination results in that the instruction is not from the up key (No in Step S15), the channel switch control module 40 acquires a playback start position of a channel (previous channel) whose channel number is smaller than the channel number of the channel which is being played back currently (Step S17). That is, time information recorded at the same time is searched in a channel whose channel number is smaller than the channel which is being played back currently of the channels recorded simultaneously by the second recording method. An address corresponding to the time information is acquired. The playback start position is thus acquired. Then, the procedure returns to Step S12, where the TS 43 of the designated channel is read from the acquired playback position and played back. Thus, switching the channel is carried out.

When the determination in Step S14 results in that no instruction has been received from the channel up/down key 150e (No in Step S14), the channel switch control module 40 determines whether an instruction from any of the direct channel selection keys 150c has been received or not (Step S18). When the determination in Step S18 results in that no instruction has been received from any direct channel selection key 150c (No in Step S18), the procedure of processing is terminated. On the contrary, when the determination results in that an instruction has been received from any of the direct channel selection keys 150c (Yes in Step S18), the channel switch control module 40 determines whether a designated channel has been recorded or not (Step S19).

When the determination in Step S19 results in that the designated channel has not been recorded (No in Step S19), warning indicating that the channel cannot be switched to the designated channel is displayed (Step S20). On the contrary, when the determination results in that the designated channel has been recorded (Yes in Step S19), the playback start position of the designated channel is acquired (Step S21). That is, time information recorded at the same time is searched in a channel designated by the direct channel selection key 150c of the channels recorded simultaneously by the second recording method. An address corresponding to the time information is acquired. The playback start position is thus acquired. Then, the procedure returns to Step S12, where data is read from the acquired playback position. Thus, switching the channel is carried out.

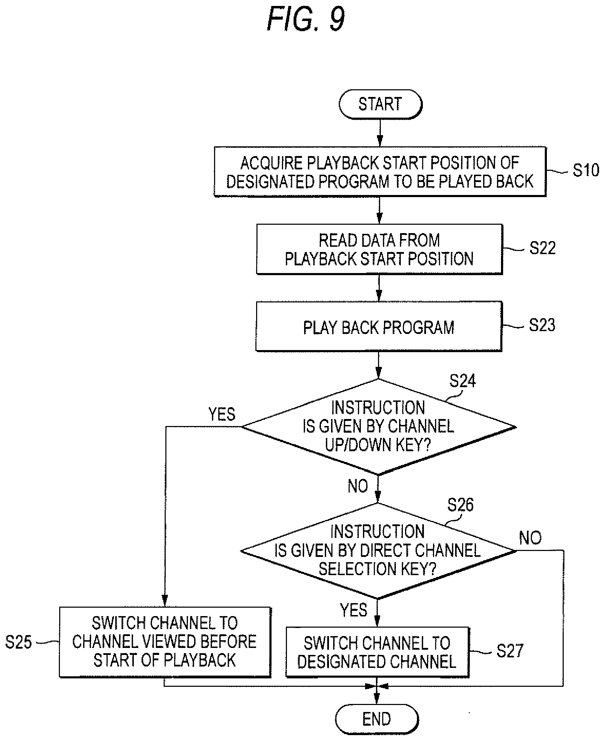

Fig. 9 is a flow chart showing the procedure of processing to be executed by the channel switch control module 40 using the first playback method in this embodiment. The procedure of processing until a channel being played back by the first playback method is switched will be described with reference to Fig. 9.

First, the recording/playback control module 22 searches the first recording area 171 for a channel of a program selected from the recorded list and an address corresponding to the start time of the program so as to acquire a playback start position (Step S10). Next, the recording/playback control module 22 reads a TS 43 at the acquired playback start position from the first recording area 171 (Step S22). The recording/playback control module 22 sends the TS 43 read in Step 22 to the audio processing module 15 and the video processing module 16 so as to play back the program (Step S23).

Next, the channel switch control module 40 determines whether an instruction from the channel up/down key 150e has been received or not (Step S24). When the determination in Step S24 results in that an instruction from the channel up/down key 150e has been received (Yes in Step S24), the channel switch control module 40 switches the currently played back channel to a channel viewed immediately before the start of the playback so as to view the current broadcasting program of the switched channel (Step S25). Alternatively, the channel may be switched to one of adjacent channels to the channel viewed immediately before the start of the playback so as to view the current broadcasting program of the switched channel.

When the determination in Step S24 results in that no instruction has been received from the channel up/down key 150e (No in Step S24), the channel switch control module 40 determines whether an instruction from any of the direct channel selection keys 150c has been received or not (Step S26). When the determination in Step S26 results in that no instruction has been received from any direct channel selection key 150c (No in Step S26), the procedure of processing is terminated. On the contrary, when the determination results in that an instruction has been received from any of the direct channel selection keys 150c (Yes in Step S26), the channel switch control module 40 switches the channel of the program being played back to the designated channel so as to view the current broadcasting program of the designated and switched channel (Step S27). Thus, the operation of switching the channel being played back by the first playback method is terminated.

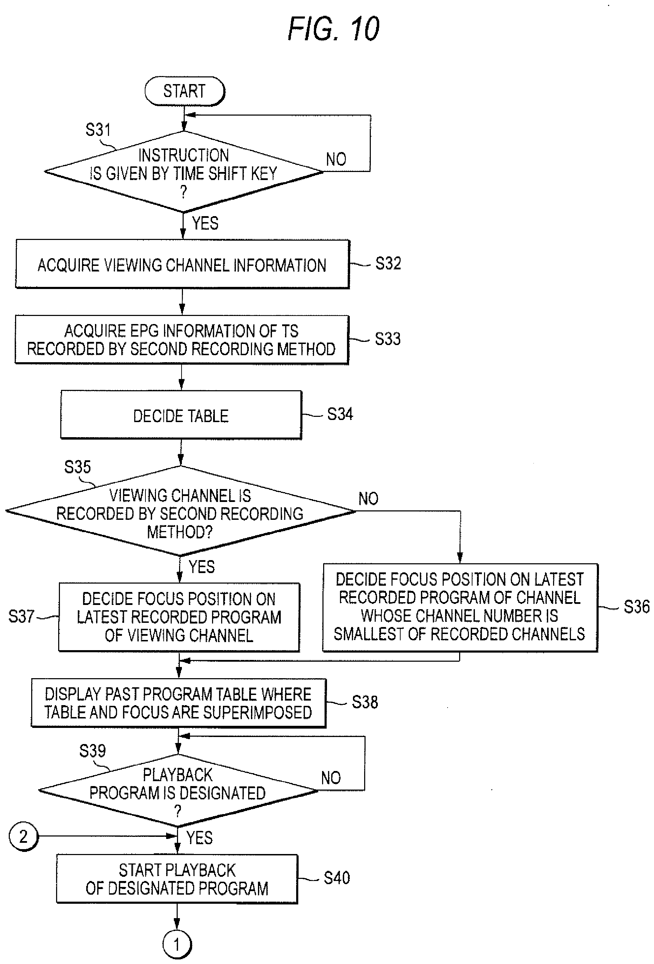

The past program table generating module 50 generates a signal for generating the past program table 44 based on EPG information included in TSs 43 stored in the second recording area 172. The procedure of processing for generating the past program table 44, which procedure is executed by the past program table generating module 50, will be described with reference to Fig. 10.

Fig. 10 is a flow chart showing the procedure to display the past program table 44 at the beginning of playback based on the second playback method, which procedure is executed by the past program table generating module 50 in this embodiment.

First, the past program table generating module 50 determines whether an instruction has been received from the time shift key 150k or not (Step S31). When the determination in Step S31 results in that no instruction has been received from the time shift key 150k (No in Step S31), the procedure returns to Step S31.

On the contrary, when the determination in Step S31 results in that an instruction has been received from the time shift key 150k (Yes in Step S31), the past program table generating module 50 then receives channel information of a channel being currently viewed, from the signal processing module 12 (Step S32).

Next, the past program table generating module 50 acquires EPG information from TSs 43 of channels recorded by the second recording method (Step S33). That is, EPG information is acquired from each TS 43 stored in the second recording area 172.

Next, the past program table generating module 50 generates a table 46 based on the channel information acquired in Step S33 (Step S34). That is, a table 46 where program information is displayed in each column with the ordinate set as the recording time indicator 47 and the abscissa set as the channel indicator 48.

Next, the past program table generating module 50 determines whether the currently viewed channel is a channel recorded by the second recording method or not (Step S35). When the determination in Step S35 results in that the channel is not a channel recorded by the second recording method (No in Step S35), the position of the focus 45 is decided as the latest recorded program of a channel whose channel number is the smallest of the channels recorded by the second recording method (Step S36). Channels are displayed in channel number order by the channel indicator 48 in the past program table 44. Therefore, the position of the focus 45 decided in Step S36 is an end space of the table 46.

On the other hand, when the determination in Step S35 results in that the channel is a channel recorded by the second recording method (Yes in Step S35), the position of the focus is decided as the latest recorded program of the channel which is being viewed (Step S37).

Next, the past program table generating module 50 displays the past program table 44 where the table 46 decided in Step S34 and the focus 45 decided in Step S36 or S37 are superimposed on each other (Step S38).

Next, the past program table generating module 50 determines whether a program to be played back has been designated from the past program table 44 or not (Step S39). That is, determination is made as to whether the focus 45 has been moved onto a desired recorded program and the decide key 150g has been pushed down or not.

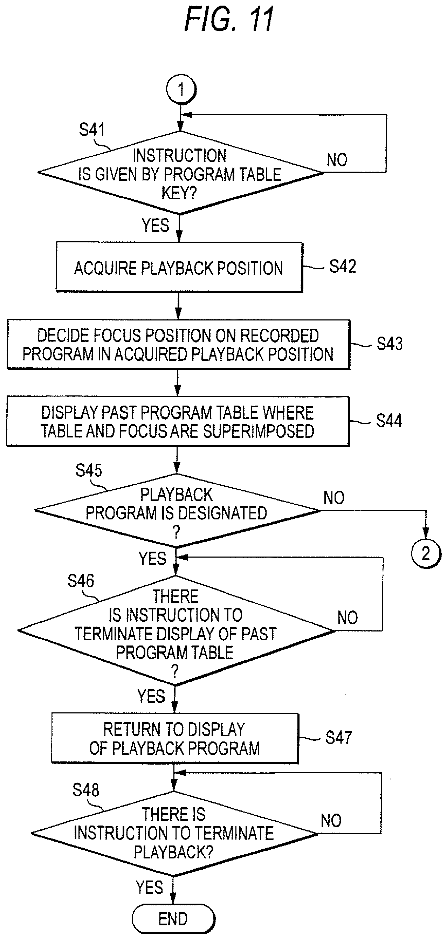

When the determination in Step S39 results in that no program to be played back has been designated (No in Step S39), the procedure returns to Step S39. On the contrary, when the determination in Step S39 results in that a program to be played back has been designated (Yes in Step S39), playback of the designated recorded program is started. Then, the procedure advances to Step S41 shown in Fig. 11.

Next, the procedure of displaying the past program table 44 when the program table key 1501 is pushed down during playback based on the second playback method will be described with reference to Fig. 11. Fig. 11 is a flow chart showing the procedure of displaying the past program table 44 during playback based on the second playback method, which procedure is executed by the past program table generating module 50 in this embodiment.

First, the past program table generating module 50 determines whether an instruction has been received from the program table key 1501 or not (Step S41). When the determination in Step S41 result in that no instruction has been received from the program table key 1501 (No in Step S41), the procedure returns to Step S41. On the contrary, when the determination results in that an instruction has been received from the program table key 1501 (Yes in Step S41), the past program table generating module 50 acquires a playback position of a TS 43 which is being played back by the recording/playback control method 22 (Step S42).

Next, the past program table generating module 50 decides the position of the focus 45 as a position corresponding to the playback position acquired in Step S42 (Step S43). Next, the past program table generating module 50 displays the past program table 44 where the table 46 and the focus 45 decided in Step S43 are superimposed on each other (Step S44).

Next, the past program table generating module 50 determines whether a program to be played back has been designated from the past program table 44 displayed in Step S44 or not (Step S45). When the determination in Step S45 results in that a program to be played back has been designated (Yes in Step S45), the procedure returns to the aforementioned Step S40. On the contrary, When the determination in Step S45 results in that no program to be played back has been designated (No in Step S45), the past program table generating module 50 then determines whether an instruction to terminate the display of the past program table 44 has been received or not (Step S46). Assume that the instruction to terminate the display of the past program table 44 is executed, for example, by pushing down the program table key 1501 again.

When the determination in Step S46 results in that the instruction to terminate the display of the past program table 44 has not been received (No in Step S46), the procedure returns to Step S46. On the contrary, when the determination in Step S46 results in that the instruction to terminate the display of the past program table 44 has been received (Yes in Step 46), the program which was being played back is displayed again (Step S47). That is, playback is resumed at the playback position acquired in Step S42.

Next, the past program table generating module 50 determines whether an instruction to terminate the playback based on the second playback method has been received or not (Step S48). When the determination in Step S48 results in that the instruction to terminate the playback has not been received (No in Step S48), the procedure returns to Step S48. On the contrary, when the determination in Step S48 results in that the instruction to terminate the playback has been received (Yes in Step S48), the playback based on the second playback method is terminated. The instruction to terminate the playback, for example, means that an instruction to escape from the time shift mode is given by the time shift key 150k, the stop button or the like. Thus, the procedure of displaying the past program table 44 during playback based on the second playback method, which procedure is executed by the past program table generating module 50, is terminated.

When the time shift key 150k is pushed down to enter the time shift mode again, the procedure returns to the aforementioned Step S31 of Fig. 10.

According to this embodiment configured thus, a program being played back can be displayed more exactly in the past program table 44 when the playback is being carried out by the second playback method.

Also in the case where the multiple channels have been recorded for a long time by the second recording method, a program being played back can be indicated specifically in the past program table 44 by use of the focus 45.

In addition, in the case where the multiple channels have been recorded simultaneously, a channel being played back can be switched to another channel recorded in the same time as the playback time of the channel being played back. Thus, the channel can be switched to view a program retrospectively as if broadcasting of the program were viewed in real time. In this manner, recorded programs can be played back in a different view point from that in the related art, and a novel method for searching an increasing number of recorded programs for a program to be viewed can be provided. In this case, the past program table 44 can be displayed by the past program table generating module 50 in this embodiment. Thus, to which channel the channel has moved can be grasped easily.

Incidentally, the invention is not limited to the aforementioned embodiment per se and constituent members may be changed or modified for embodying the invention without departing from the gist of the invention in a practical stage. Constituent members disclosed in the aforementioned embodiment may be combined suitably to form various inventions. For example, some of all constituent members disclosed in the embodiment may be removed. In addition, constituent members disclosed in different embodiments may be combined suitably.

## Claims

1. An electronic apparatus comprising:
a broadcast receiving module (100) configured to receive video signals corresponding to programs broadcast in multiple channels;
an EPG receiving module (100) configured to receive EPG information corresponding to each of the programs;
a recording/playback control module (22) configured to record the programs of the multiple channels onto a recording medium (17) together with the EPG information corresponding to each of the programs, and to play back the programs and the EPG information recorded on the recording medium (17);
a time information table creating module (22) configured to create a time information table associating channel information, program information, time information and address in each of the channels recorded simultaneously; and
a program table generating module (50) configured to generate a program table where the programs recorded on the recording medium (17) are listed in a form of a table whose axes designate a recording time and the channel respectively, based on the EPG information played back by the recording/playback control module (22),
wherein the recording/playback control module (22) is configured to play back the recorded programs in sequential order with respect to a channel in the program table,
wherein when the program table generating module (50) receives an instruction to display the program table while the recording/playback control module (22) plays back a given program, the program table generating module (22) highlights the given program in the program table; and
wherein the electronic apparatus further comprises
a channel switch control module (40) for controlling the operation of switching a channel during playback and configured to switch a first channel to second channel among the multiple channels in accordance with a received switching instruction; and wherein the program is changed to a program of the second channel which was recorded at the same time as the program of the first channel being played back, the channel switch control module (40) being configured to switch the first channel to the second channel with reference to the time information table.

2. The apparatus according to Claim 1, wherein
when the program table is displayed after the channel has been switched by the channel switch control module (40), the program table generating module highlights a section corresponding to a program to be played back in the second channel.

3. The apparatus according to Claim 2, wherein when the program table generating module (50) receives the instruction to display the program table while a broadcast program is viewed, the program table generating module (50) displays the program table showing the programs in order from a recorded program whose recording time is the latest.

4. The apparatus according to Claim 3, wherein when the program table generating module (50) receives the instruction to display the program table while the broadcast program is viewed with respect to a given channel, the program table generating module (50) determines whether the recoding medium (17) stores the programs of the given channel,
wherein when the programs of the given channel are stored in the recording medium (17), the program table generating module (50) highlights a section corresponding to a latest recorded program of the given channel, and
wherein when the programs of the given channel are not stored in the recording medium (17), the program table generating module (50) highlights a section corresponding to a latest recorded program of a channel displayed in an end of the program table.

5. The apparatus according to Claim 4, wherein when the recording/playback control module (22) is recording a part of the latest recorded program, the program table generating module (50) displays the part being recorded, in a different color from a color of any other part having been recorded, in the section corresponding to the latest recorded program.

6. The apparatus according to any one of Claims 1 through 5 further comprising: a display device (LCD) configured to display the program played back by the recording/playback control module (22).

7. A program table display method comprising:
receiving video signals corresponding to programs broadcast in multiple channels;
recording the video signals corresponding to programs of the channels;
receiving EPG information corresponding to each of the programs of the channels;
creating a time information table (42) associating channel information, program information, time information and address in each of the channels recorded simultaneously;
generating a program table where the recorded programs are listed in a form of a table whose axes designate a recording time and the channel respectively based on the EPG information;
playing back the recorded programs in sequential order with respect to a channel in the program table; and
displaying the program table which highlights a section corresponding to the program being played back when an instruction to display the program table is received during playing back the recorded program;
controlling the operation of switching a channel during playback so as to switch a first channel to second channel among the multiple channels in accordance with a received switching instruction; and
wherein the program is changed to a program of the second channel which was recorded at the same time as the program of the first channel being played back, by switching the first channel to the second channel with reference to the time information table.

## Patentansprüche

1. Elektronische Vorrichtung, umfassend:
ein Broadcast-Empfangsmodul (100), das eingerichtet ist, Videosignale, die Programmen entsprechen, die auf mehreren Kanälen gebroadcastet werden, zu empfangen;
ein EPG-Empfangsmodul (100), das eingerichtet ist, EPG-Informationen, die jedem der Programme entsprechen, zu empfangen;
ein Aufzeichnungs-/Wiedergabesteuerungsmodul (22), das eingerichtet ist, die Programme der mehreren Kanäle auf einem Aufzeichnungsmedium (17) zusammen mit den EPG-Informationen, die jedem der Programme entsprechen, aufzuzeichnen, und die auf dem Aufzeichnungsmedium (17) aufgezeichneten Programm und EPG-Informationen wiederzugeben;
ein Zeitinformationstabellenerstellungsmodul (22), das eingerichtet ist, eine Zeitinformationstabelle zu erstellen, die Kanalinformationen, Programminformationen, Zeitinformationen und Adressen in jedem der gleichzeitig aufgenommenen Kanälen zuordnet; und
ein Programmtabellenerzeugungsmodul (50), das eingerichtet ist, eine Programmtabelle zu erzeugen, in der die auf dem Aufzeichnungsmedium (17) aufgezeichneten Programme in Form einer Tabelle aufgelistet sind, deren Achsen eine Aufzeichnungszeit und einen Kanal bezeichnen, basierend auf den EPG-Informationen, die durch das Aufzeichnungs-/Wiedergabesteuerungsmodul (22) wiedergegeben werden,
wobei das Aufzeichnungs-/Wiedergabesteuerungsmodul (22) eingerichtet ist, die aufgezeichneten Programme in sequentieller Reihenfolge in Bezug auf einen Kanal in der Programmtabelle wiederzugeben, wobei, wenn das Programmtabellenerzeugungsmodul (50) eine Anweisung empfängt, die Programmtabelle anzuzeigen, während das Aufzeichnungs-/Wiedergabesteuerungsmodul (22) ein gegebenes Programm wiedergibt, das Programmtabellenerzeugungsmodul (22) das gegebene Programm in der Programmtabelle hervorhebt; und
wobei die elektronische Vorrichtung ferner umfasst:
ein Kanalumschaltsteuerungsmodul (40) zum Steuern des Betriebs des Umschaltens eines Kanals während der Wiedergabe und das eingerichtet ist, einen ersten Kanal auf einen zweiten Kanal unter den mehreren Kanäle umzuschalten gemäß einer empfangenen Umschaltanweisung; und wobei
das Programm auf ein Programm des zweiten Kanals, das zur gleichen Zeit aufgenommen wurde wie das wiedergegebene Programm des ersten Kanals, umgeschaltet wird, wobei das Kanalumschaltsteuerungsmodul (40) eingerichtet ist, den ersten Kanal auf den zweiten Kanal unter Bezugnahme auf die Zeitinformationstabelle umzuschalten.

2. Vorrichtung nach Anspruch 1, wobei
wenn die Programmtabelle angezeigt wird, nachdem der Kanal durch das Kanalumschaltsteuerungsmodul (40) umgeschaltet wurde, das Programmtabellenerzeugungsmodul einen Abschnitt, der einem Programm entspricht, das auf den zweiten Kanal wiedergegeben werden soll, hervorhebt.

3. Vorrichtung nach Anspruch 2, wobei, wenn das Programmtabellenerzeugungsmodul (50) die Anweisung empfängt, die Programmtabelle anzuzeigen, während ein Broadcastprogramm angesehen wird, das Programmtabellenerzeugungsmodul (50) die Programmtabelle, zeigend die Programme in der Reihenfolge von einem aufgezeichneten Programm, dessen Aufzeichnungszeit die letzte ist, anzeigt.

4. Vorrichtung nach Anspruch 3, wobei, wenn das Programmtabellenerzeugungsmodul (50) die Anweisung empfängt, die Programmtabelle anzuzeigen, während das Broadcastprogramm in Bezug auf einen bestimmten Kanal angesehen wird, das Programmtabellenerzeugungsmodul (50) bestimmt, ob das Aufzeichnungsmedium (17) die Programme des gegebenen Kanals speichert,
wobei, wenn die Programme des gegebenen Kanals in dem Aufzeichnungsmedium (17) gespeichert sind, das Programmtabellenerzeugungsmodul (50) einen Abschnitt, der einem zuletzt aufgezeichneten Programm des gegebenen Kanals entspricht, hervorhebt, und
wobei, wenn die Programme des gegebenen Kanals in dem Aufzeichnungsmedium (17) nicht gespeichert sind, das Programmtabellenerzeugungsmodul (50) einen Abschnitt, der einem zuletzt aufgezeichneten Programm eines Kanals entspricht, der an einem Ende der Programmtabelle angezeigt wird, hervorhebt.

5. Vorrichtung nach Anspruch 4, wobei, wenn das Aufzeichnungs-/Wiedergabesteuerungsmodul (22) einen Teil des zuletzt aufgezeichneten Programms aufzeichnet, das Programmtabellenerzeugungsmodul (50) den aufgezeichneten Teil anzeigt, in einer anderen Farbe als eine Farbe irgendeines anderen aufgezeichneten Teils in dem Abschnitt, der dem zuletzt aufgezeichneten Programm entspricht.

6. Vorrichtung nach einem der Ansprüche 1 bis 5, ferner umfassend:
eine Anzeigeeinrichtung (LCD), die eingerichtet ist, das durch das Aufzeichnungs-/Wiedergabesteuerungsmodul (22) wiedergegebene Programm anzuzeigen.

7. Programmtabellenanzeigeverfahren, umfassend:
Empfangen von Videosignalen, die auf mehreren Kanälen gebroadcasteten Programmen entsprechen;
Aufzeichnen der Videosignale, die Programmen der Kanäle entsprechen;
Empfangen von EPG-Informationen, die jedem der Programme der Kanäle entsprechen;
Erstellen einer Zeitinformationstabelle (42), zuordnende Kanalinformationen, Programminformationen, Zeitinformationen und Adressen in jedem der gleichzeitig aufgezeichneten Kanäle;
Erzeugen einer Programmtabelle, in der die aufgezeichneten Programme in Form einer Tabelle, deren Achsen eine Aufzeichnungszeit und den Kanal basierend auf den EPG-Informationen bezeichnen, aufgelistet sind;
Wiedergeben der aufgezeichneten Programme in sequentieller Reihenfolge in Bezug auf einen Kanal in der Programmtabelle; und
Anzeigen der Programmtabelle, die einen Abschnitt, der dem wiedergegebenen Programm entspricht, hervorhebt, wenn eine Anweisung, die Programmtabelle anzuzeigen, während der Wiedergabe des aufgezeichneten Programms empfangen wird;
Steuern des Betriebs des Umschaltens eines Kanals während der Wiedergabe, um einen ersten Kanal auf einen zweiten Kanal unter den mehreren Kanälen gemäß einer empfangenen Umschaltanweisung umzuschalten; und
wobei das Programm auf ein Programm des zweiten Kanals, das zur gleichen Zeit aufgenommen wurde wie das Programm des wiedergegebenen ersten Kanals, gewechselt wird durch Umschalten des ersten Kanals auf den zweiten Kanal unter Bezugnahme auf die Zeitinformationstabelle.

## Revendications

1. Appareil électronique comprenant :
un module de réception de radiodiffusion (100) configuré de manière à recevoir des signaux vidéo correspondant à des programmes diffusés dans de multiples canaux ;
un module de réception de guide électronique de programmes, EPG, (100), configuré de manière à recevoir des informations de guide EPG correspondant à chacun des programmes ;
un module de commande d'enregistrement/lecture (22) configuré de manière à enregistrer les programmes des multiples canaux sur un support d'enregistrement (17), conjointement avec les informations de guide EPG correspondant à chacun des programmes, et à lire les programmes et les informations de guide EPG enregistrés sur le support d'enregistrement (17) ;
un module de création de table d'informations temporelles (22) configuré de manière à créer une table d'informations temporelles associant des informations de canal, des informations de programme, des informations temporelles et une adresse dans chacun des canaux enregistrés simultanément ; et
un module de génération de table de programmes (50) configuré de manière à générer une table de programmes dans laquelle les programmes enregistrés sur le support d'enregistrement (17) sont listés sous la forme d'une table dont les axes désignent respectivement une heure d'enregistrement et le canal, sur la base des informations de guide EPG lues par le module de commande d'enregistrement/lecture (22) ;
dans lequel le module de commande d'enregistrement/lecture (22) est configuré de manière à lire les programmes enregistrés dans un ordre séquentiel par rapport à un canal dans la table de programmes ;
dans lequel lorsque le module de génération de table de programmes (50) reçoit une instruction pour afficher la table de programmes tandis que le module de commande d'enregistrement/lecture (22) lit un programme donné, le module de génération de table de programmes (22) met en évidence le programme donné dans la table de programmes ; et
dans lequel l'appareil électronique comprend en outre :
un module de commande de commutation de canal (40) destiné à commander l'opération de commutation d'un canal pendant la lecture, et configuré de manière à commuter un premier canal sur un second canal, parmi les multiples canaux, conformément à une instruction de commutation reçue ; et
dans lequel le programme est remplacé par un programme du second canal qui a été enregistré en même temps que le programme du premier canal en cours de lecture ;
le module de commande de commutation de canal (40) étant configuré de manière à commuter le premier canal sur le second canal en référence à la table d'informations temporelles.

2. Appareil selon la revendication 1, dans lequel :
lorsque la table de programmes est affichée après que le canal a été commuté par le module de commande de commutation de canal (40), le module de génération de table de programmes met en évidence une section correspondant à un programme à lire dans le second canal.

3. Appareil selon la revendication 2, dans lequel, lorsque le module de génération de table de programmes (50) reçoit l'instruction d'afficher la table de programmes pendant la visualisation d'un programme de radiodiffusion, le module de génération de table de programmes (50) affiche la table de programmes montrant les programmes dans l'ordre à partir d'un programme enregistré dont l'heure d'enregistrement est la plus récente.

4. Appareil selon la revendication 3, dans lequel, lorsque le module de génération de table de programmes (50) reçoit l'instruction d'afficher la table de programmes tandis que le programme de radiodiffusion est visualisé par rapport à un canal donné, le module de génération de table de programmes (50) détermine si le support d'enregistrement (17) stocke les programmes du canal donné ;
dans lequel, lorsque les programmes du canal donné sont stockés dans le support d'enregistrement (17), le module de génération de table de programmes (50) met en évidence une section correspondant à un programme enregistré le plus récemment du canal donné ; et
dans lequel, lorsque les programmes du canal donné ne sont pas stockés dans le support d'enregistrement (17), le module de génération de table de programmes (50) met en évidence une section correspondant à un programme enregistré le plus récemment d'un canal affiché à une fin de la table de programmes.

5. Appareil selon la revendication 4, dans lequel, lorsque le module de commande d'enregistrement/lecture (22) enregistre une partie du programme enregistré le plus récemment, le module de génération de table de programmes (50) affiche la partie enregistrée, dans une couleur différente d'une couleur de toute autre partie ayant été enregistrée, dans la section correspondant au programme enregistré le plus récemment.

6. Appareil selon l'une quelconque des revendications 1 à 5, comprenant en outre :
un dispositif d'affichage (LCD) configuré de manière à afficher le programme lu par le module de commande d'enregistrement/lecture (22).

7. Procédé d'affichage d'une table de programmes comprenant les étapes ci-dessous consistant à :
recevoir des signaux vidéo correspondant à des programmes radiodiffusés dans de multiples canaux ;
enregistrer les signaux vidéo correspondant aux programmes des canaux ;
recevoir des informations de guide EPG correspondant à chacun des programmes des canaux ;
créer une table d'informations temporelles (42) associant des informations de canal, des informations de programme, des informations temporelles et une adresse dans chacun des canaux enregistrés simultanément ;
générer une table de programmes dans laquelle les programmes enregistrés sont listés sous la forme d'une table dont les axes désignent respectivement une heure d'enregistrement et le canal, sur la base des informations de guide EPG ;
lire les programmes enregistrés dans l'ordre séquentiel par rapport à un canal dans la table de programmes ; et
afficher la table de programmes, laquelle met en surbrillance une section correspondant au programme en cours de lecture lorsqu'une instruction d'affichage de la table de programmes est reçue pendant la lecture du programme enregistré ;
commander l'opération de commutation d'un canal pendant la lecture de manière à commuter un premier canal sur un second canal parmi les multiples canaux conformément à une instruction de commutation reçue ; et
dans lequel le programme est remplacé par un programme du second canal qui a été enregistré en même temps que le programme du premier canal en cours de lecture, en commutant le premier canal sur le second canal en référence à la table d'informations temporelles.
